# EUROPEAN PATENT APPLICATION

(11) **EP 4 531 402 A1**
(43) Date of publication of application: **02.04.2025**
(21) Application number: 24198363.4
(22) Date of filing: 04.09.2024
(51) Int. Cl.: H04N 19/70

(54) **VIDEO CODING APPARATUS AND DECODING APPARATUS**

(30) Priority: 27.09.2023 JP 2023164675
(71) Applicant: Sharp Kabushiki Kaisha, Sakai City, Osaka 590-8522 (JP)
(72) Inventor: CHUJOH, Takeshi, Sakai City, Osaka, 590-8522 (JP); IKAI, Tomohiro, Sakai City, Osaka, 590-8522 (JP); YASUGI, Yukinobu, Sakai City, Osaka, 590-8522 (JP); AONO, Tomoko, Sakai City, Osaka, 590-8522 (JP)
(74) Representative: Müller Hoffmann & Partner

(57) **Abstract**

Object

In an SEI processing order SEI message, input and output image sizes are different depending on an SEI message, and thus there is a problem in that consistency in processing cannot be achieved.

Solution

A video decoding apparatus according to an aspect of the present invention includes an image decoding apparatus configured to decode coded data and generate a decoded image, a supplemental enhancement processing apparatus configured to perform supplemental enhancement processing on the decoded image, and a supplemental enhancement information decoding apparatus configured to decode multiple pieces of supplemental enhancement information for causing the supplemental enhancement processing apparatus to operate. The supplemental enhancement information includes supplemental enhancement information indicating priority processing order of the multiple pieces of supplemental enhancement information. The supplemental enhancement information includes information indicating change of a parameter of the decoded image to be input to the supplemental enhancement processing apparatus in accordance with the priority processing order.

## Description

### Technical Field

Embodiments of the present invention relate to a video coding apparatus and a decoding apparatus.

### Background Art

A video coding apparatus which generates coded data by coding a video, and a video decoding apparatus which generates decoded images by decoding coded data are used for efficient transmission or recording of videos.

Specific video coding schemes include, for example, H.264/AVC and an H.265/High-Efficiency Video Coding (HEVC) scheme, and the like.

In such a video coding scheme, images (pictures) constituting a video are managed in a hierarchical structure including slices obtained by splitting an image, Coding Tree Units (CTUs) obtained by splitting a slice, Coding Units (CUs) obtained by splitting a coding tree unit, and Transform Units (TUs) obtained by splitting a coding unit, and are coded/decoded for each CU.

In such a video coding scheme, usually, a prediction image is generated based on a locally decoded image that is obtained by coding/decoding an input image, and a prediction error (which may be referred to also as a "difference image" or a "residual image") obtained by subtracting the prediction image from the input image (source image) is coded. Generation methods of prediction images include inter picture prediction (inter prediction) and intra picture prediction (intra prediction).

A Supplemental Enhancement Information (SEI) message for transmitting image properties, display methods, timings, and the like simultaneously with coded data is defined as a technique for video coding and decoding in recent years. In NPL 1, in a case that there are multiple SEI messages described in NPL 2 or the like, an SEI message defining information (priority processing order information) indicating preferable processing order determined on a coding side is proposed.

### Citation List

### Non Patent Literature

NPL 1: SEI processing order SEI message in VVC (draft 5), JVET-AE2027
NPL 2: Consent: H.266 V3 "Versatile video coding" (Rev.), ITU-T SG16 (Study Period 2022) Temporary Document 171-PLEN

### Summary of Invention

### Technical Problem

In an SEI processing order SEI message disclosed in NPL 1, input and output image sizes are different depending on the SEI message, and thus there is a problem in that consistency in processing cannot be achieved.

### Solution to Problem

A video decoding apparatus according to an aspect of the present invention includes:
an image decoding apparatus configured to decode coded data and generate a decoded image;
a supplemental enhancement processing apparatus configured to perform supplemental enhancement processing on the decoded image; and
a supplemental enhancement information decoding apparatus configured to decode multiple pieces of supplemental enhancement information for causing the supplemental enhancement processing apparatus to operate.

The multiple pieces of supplemental enhancement information include a piece of supplemental enhancement information indicating priority processing order of the multiple pieces of supplemental enhancement information.

The piece of supplemental enhancement information indicating the priority processing order of the multiple pieces of supplemental enhancement information includes information indicating change of a parameter of the decoded image to be input to the supplemental enhancement processing apparatus in accordance with the priority processing order.

A video coding apparatus according to an aspect of the present invention includes:
an image coding apparatus configured to code a video signal and generate coded data;
a supplemental enhancement information generating apparatus configured to generate multiple pieces of supplemental enhancement information; and
a supplemental enhancement information coding apparatus configured to code the multiple pieces of supplemental enhancement information.

The multiple pieces of supplemental enhancement information include a piece of supplemental enhancement information indicating priority processing order of the multiple pieces of supplemental enhancement information.

The piece of supplemental enhancement information indicating the priority processing order of the multiple pieces of supplemental enhancement information includes information indicating change of a parameter of a local decoded image to be input to a supplemental enhancement processing apparatus in accordance with the priority processing order.

### Advantageous Effects of Invention

By employing such a configuration, a problem that consistency in processing cannot be achieved due to differences in input and output image sizes can be solved.

### Brief Description of Drawings

FIG. 1 is a schematic diagram illustrating a configuration of a video transmission system according to the present embodiment.
FIG. 2 is a diagram illustrating a hierarchical structure of coded data.
FIG. 3 is a diagram illustrating a hierarchical structure of coded data in units of PU.
FIG. 4 is a schematic diagram illustrating a configuration of an image decoding apparatus.
FIG. 5 is a flowchart illustrating general operation of the image decoding apparatus.
FIG. 6 is a block diagram illustrating a configuration of an image coding apparatus.
FIG. 7 is a diagram illustrating a syntax of an SEI processing order SEI message.
FIG. 8 is a diagram illustrating an SEI payload type of an SEI message.
FIG. 9 is a diagram illustrating a syntax of the SEI processing order SEI message according to the present embodiment.
FIG. 10 is a diagram illustrating another syntax of the SEI processing order SEI message according to the present embodiment.
FIG. 11 is a diagram illustrating another syntax of the SEI processing order SEI message according to the present embodiment.
FIG. 12 is a diagram illustrating a syntax of an SEI payload being a container of the SEI message.

### Description of Embodiments

### First Embodiment

Embodiments of the present invention will be described below with reference to the drawings.

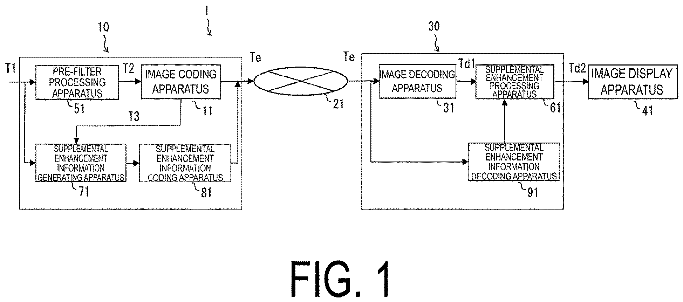

FIG. 1 is a schematic diagram illustrating a configuration of a video transmission system according to the present embodiment.

The video transmission system 1 is a system in which coded data obtained by coding an image is transmitted, the transmitted coded data is decoded, and thus the coded data is displayed. The video transmission system 1 includes a video coding apparatus 10, a network 21, a video decoding apparatus 30, and an image display apparatus 41.

The video coding apparatus 10 includes an image coding apparatus (image coder) 11, a supplemental enhancement information generating apparatus (supplemental enhancement information generating unit) 71, a supplemental enhancement information coding apparatus (supplemental enhancement information coder) 81, and a pre-filter processing apparatus (pre-filter processing unit) 51.

The video coding apparatus 10 generates a pre-filter processing image T2 from an input video T1 in a pre-filter processing apparatus 51, performs compression and coding of the image in the image coding apparatus 11 and analyzes the input video T1 and a local decoded image T3 of the image coding apparatus 11, generates supplemental enhancement information for inputting to a supplemental enhancement processing apparatus 61 in the supplemental enhancement information generating apparatus 71, performs coding in the supplemental enhancement information coding apparatus 81 to generate coded data Te, and transmits the coded data Te out to the network 21.

The video decoding apparatus 30 includes an image decoding apparatus (image decoder) 31, a supplemental enhancement information decoding apparatus (supplemental enhancement information decoder) 91, and a supplemental enhancement processing apparatus (supplemental enhancement processing unit) 61.

The video decoding apparatus 30 decodes the coded data Te received from the network 21 in the image decoding apparatus 31 and the supplemental enhancement information decoding apparatus 91, performs supplemental enhancement processing on a decoded image Td1 in the supplemental enhancement processing apparatus 61 using supplemental enhancement information, and outputs a supplemental enhancement decoded image Td2 to the image display apparatus 41.

Note that the supplemental enhancement processing apparatus 61 may directly output the decoded image Td1 without performing the supplemental enhancement processing using the supplemental enhancement information.

The image display apparatus 41 displays all or part of the supplemental enhancement processing image Td2 input from the supplemental enhancement processing apparatus 61. For example, the image display apparatus 41 includes a display device such as a liquid crystal display and an organic Electroluminescence (EL) display. Examples of display types include stationary, mobile, and HMD. In addition, in a case that the image decoding apparatus 31 has a high processing capability, an image having high image quality is displayed, and in a case that the apparatus has a lower processing capability, an image which does not require a high processing capability and display capability is displayed.

The network 21 transmits the coded supplemental enhancement information and the coded data Te to the image decoding apparatus 31. A part or all of the coded supplemental enhancement information may be included in the coded data Te as supplemental enhancement information SEI. The network 21 is the Internet, a Wide Area Network (WAN), a Local Area Network (LAN), or a combination thereof. The network 21 is not limited to a bidirectional communication network and may be a unidirectional communication network that transmits broadcast waves for terrestrial digital broadcasting, satellite broadcasting, or the like. The network 21 may be substituted with a storage medium in which the coded data Te is recorded, such as a Digital Versatile Disc (DVD) (trade name) or a Blue-ray Disc (BD) (trade name).

In such a configuration, a framework for enabling efficient coding and decoding of the supplemental enhancement information is provided.

### Operators

Operators used in the present specification will be described below.

">>" is a right bit shift, "<<" is a left bit shift, "&" is a bitwise AND, "|" is a bitwise OR, "|=" is an OR assignment operator, and "||" indicates a logical sum.

x ? y : z is a ternary operator that takes y in a case that x is true (other than 0) and takes z in a case that x is false (0).

Clip3(a, b, c) is a function to clip c in a value from a to b, and a function to return a in a case that c is smaller than a (c < a), return b in a case that c is greater than b (c > b), and return c in the other cases (provided that a is smaller than or equal to b (a <= b)).

abs(a) is a function that returns the absolute value of a.

Int(a) is a function that returns the integer value of a.

Floor (a) is a function that returns the maximum integer equal to or less than a.

ceil(a) is a function that returns the minimum integer equal to or greater than a.

a/d represents division of a by d (round down decimal places).

a÷d and a divided by d represent division of a by d (not rounded down).

### Structure of Coded Data Te

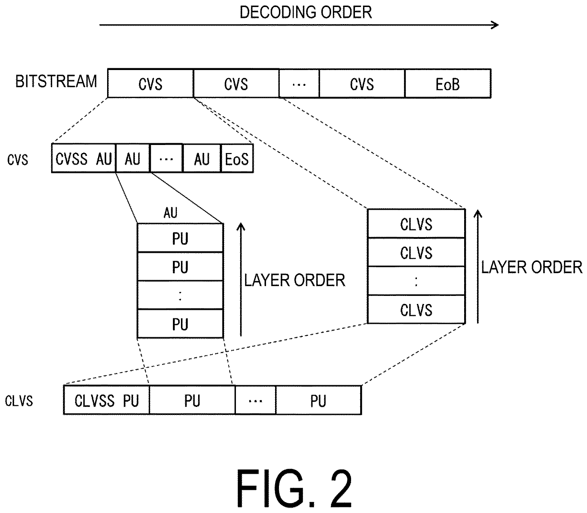

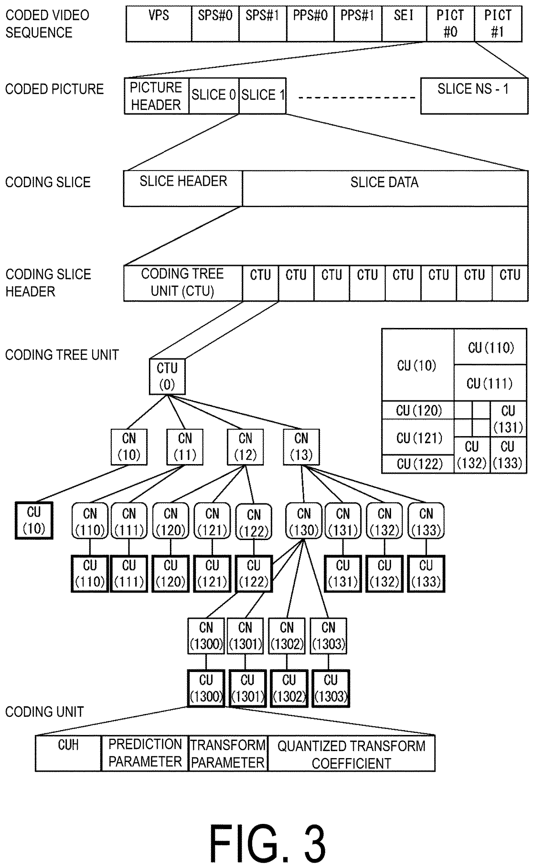

Prior to the detailed description of the image coding apparatus 11 and the image decoding apparatus 31 according to the present embodiment, a data structure of the coded data Te generated by the image coding apparatus 11 and decoded by the image decoding apparatus 31 will be described with reference to FIG. 2 and FIG. 3.

The coded data Te is a bitstream including multiple Coded Video Sequences (CVSs) and an End of Bitstream (EoB) NAL unit illustrated in FIG. 2. The CVS includes multiple Access Units (AUs) and an End of Sequence (EoS) NAL unit. The AU at the start of the CVS is referred to as a Coded Video Sequence Start (CVSS) AU. A unit obtained by splitting the CVS for each layer is referred to as a Coded Layer Video Sequence (CLVS). The AU includes Picture Units (PUs) of one or multiple layers at the same output time. In a case that a Multilayer coding scheme is not adopted, the AU includes one PU. The PU is a unit of coded data of one decoded picture including multiple NAL units. The CLVS includes PUs of the same layer, and the PU at the start of the CLVS is referred to as a Coded Layer Video Sequence Start (CLVSS) PU. The CLVSS PU is limited to the PU including randomly accessible Intra Random Access Pictures (IRAP) or Gradual Decoder Refresh Picture (GDR). The NAL unit includes a NAL unit header and Raw Byte Sequence Payload (RBSP) data. The NAL unit header includes, subsequently to 0 data of 2 bits, nuh_layer_id of 6 bits indicating a layer value, nuh_unit_type of 5 bits indicating a NAL unit type, and nuh_temporal_id_plus1 of 3 bits of a value obtained by adding 1 to a Temporal ID value.

FIG. 3 is a diagram illustrating a hierarchical structure of data in the coded data Te in units of PU. The coded data Te includes a sequence and multiple pictures constituting the sequence illustratively. FIG. 3 is a diagram illustrating a coded video sequence defining a sequence SEQ, a coded picture prescribing a picture PICT, a coding slice prescribing a slice S, a coding slice data prescribing slice data, a coding tree unit included in the coding slice data, and a coding unit included in the coding tree unit.

In the coded video sequence, a set of data referred to by the image decoding apparatus 31 to decode the sequence SEQ to be processed is defined. As illustrated in FIG. 3, the sequence SEQ includes a Video Parameter Set VPS, Sequence Parameter Sets SPS, Picture Parameter Sets PPS, an Adaptation Parameter Set (APS), a picture PICT, and Supplemental Enhancement Information SEI.

In the video parameter set VPS, with respect to a video including multiple layers, a set of coding parameters common to multiple videos and a set of coding parameters associated with the multiple layers and an individual layer included in the video are defined.

In the sequence parameter set SPS, a set of coding parameters referred to by the image decoding apparatus 31 to decode a target sequence is defined. For example, a width and a height of a picture are defined. Note that multiple SPSs may exist. In that case, any of the multiple SPSs is selected from the PPS.

Here, the sequence parameter set SPS includes the following syntax elements:
- pic_width_max_in_luma_samples: A syntax element indicating, in units of luma blocks, the width of one of the images in a single sequence, the image having the largest width. In addition, the syntax element has a value required to not be 0 and to be an integer multiple of Max(8, MinCbSizeY). Here, MinCbSizeY is a value determined by the minimum size of the luma blocks;
- pic_height_max_in_luma_samples: A syntax element indicating, in units of luma blocks, the height of one of the images in a single sequence, the image having the largest height. In addition, the syntax element has a value required to not be 0 and to be an integer multiple of Max(8, MinCbSizeY).

In the picture parameter set PPS, a set of coding parameters referred to by the image decoding apparatus 31 to decode each picture in a target sequence is defined. Note that multiple PPSs may exist. In that case, any of the multiple PPSs is selected from each picture in a target sequence.

Here, the picture parameter set PPS includes the following syntax elements.

pps_pic_width_in_luma_samples is a syntax element indicating the width of a target picture. The syntax element is required to have a value that is not 0 and that is an integer multiple of Max(8, MinCbSizeY) and that is equal to or less than sps_pic_width_max_in_luma_samples.

pps_pic_height_in_luma_samples is a syntax element indicating the height of the target picture. The syntax element is required to have a value that is not 0 and that is an integer multiple of Max(8, MinCbSizeY) and that is equal to or less than sps_pic_height_max_in_luma_samples.

pps_conformance_window_flag is a flag indicating whether a conformance (cropping) window offset parameter is subsequently signaled, the flag indicating a location where a conformance window is displayed. In a case that the flag is 1, the parameter is signaled, and in a case that the flag is 0, then no conformance window offset parameter is present.

conf_win_left_offset, conf_win_right_offset, conf_win_top_offset, conf_win_bottom_offset is an offset value indicating, for a rectangular region indicated in picture coordinates for output, the left, right, top, and bottom positions of a picture output in decoding processing. In a case that the value of the conformance_window_flag is 0, the values of conf_win_left_offset, conf_win_right_offset, conf_win_top_offset, conf_win_bottom_offset are inferred to be 0. A picture for output is pixels with the horizontal direction from SubWidthC * pps_conf_win_left_offset to pps_pic_width_in_luma_samples - (SubWidthC * pps_conf_win_right_offset + 1) and the vertical direction from SubHeightC * pps_conf_win_top_offset to pps_pic_height_in_luma_samples - (SubHeightC * pps_conf_win_bottom_offset + 1).

Here, a variable ChromaFormatIdc of a chroma format is a value of sps_chroma_format_id. A variable SubWidthC and a variable SubHightC are values determined by ChromaFormatIdc. In a case of a monochrome format, SubWidthC and SubHightC are both 1. In a case of a 4:2:0 format, SubWidthC and SubHightC are both 2. In a case of a 4:2:2 format, SubWidthC is 2 and SubHightC is 1. In a case of a 4:4:4 format, SubWidthC and SubHightC are both 1.

### Coded Picture

In a coded picture, a set of data referred to by the image decoding apparatus 31 to decode a picture PICT to be processed is defined. As illustrated in FIG. 3, the picture PICT includes a picture header PH and slices 0 to NS-1 (NS is the total number of slices included in the picture PICT).

### Coding Slice

In a coding slice, a set of data referred to by the image decoding apparatus 31 to decode a slice S to be processed is defined. As illustrated in FIG. 3, the slice includes a slice header and slice data.

The slice header includes a coding parameter group referenced by the image decoding apparatus 31 to determine a decoding method for a target slice. Slice type indication information (slice_type) indicating a slice type is one example of a coding parameter included in the slice header.

Examples of slice types that can be indicated by the slice type indication information include (1) I slice for which only intra prediction is used in coding, (2) P slice for which uni-prediction (L0 prediction) or intra prediction is used in coding, and (3) B slice for which uni-prediction (L0 prediction or L1 prediction), bi-prediction, or intra prediction is used in coding, and the like. Note that the inter prediction is not limited to uni-prediction and bi-prediction, and a prediction image may be generated by using a larger number of reference pictures. Hereinafter, in a case of a slice being referred to as a P or B slice, it indicates a slice including a block in which inter prediction can be used.

### Coding Slice Data

In coding slice data, a set of data referred to by the image decoding apparatus 31 to decode slice data to be processed is defined. The slice data includes CTUs as illustrated in the coding slice header in FIG. 3. A CTU is a block in a fixed size (for example, 64 x 64) constituting a slice, and may also be called a Largest Coding Unit (LCU).

### Coding Tree Unit

In FIG. 3, a set of data is defined that is referenced by the image decoding apparatus 31 to decode the CTU to be processed. The CTU is split into coding units CUs, each of which is a basic unit of coding processing, by a recursive Quad Tree (QT) split, Binary Tree (BT) split, or Ternary Tree (TT) split. A node of a tree structure obtained by recursive quad tree split is referred to as a Coding Node. An intermediate node of a quad tree, a binary tree, and a ternary tree is a coding node, and a CTU itself is also defined as the highest coding node.

### Coding Unit

In FIG. 3, a set of data referenced by the image decoding apparatus 31 to decode the coding unit to be processed is defined. Specifically, a CU includes a CU header CUH, a prediction parameter, a transform parameter, a quantized transform coefficient, and the like. In the CU header, a prediction mode and the like are defined.

The prediction processing may be performed for each CU or performed for each sub-CU, the sub-CU being obtained by further splitting the CU.

There are two types of predictions (prediction modes), which are intra prediction and inter prediction. Intra prediction refers to prediction in the same picture, and inter prediction refers to prediction processing performed between different pictures (for example, between pictures of different display times, and between pictures of different layer images).

Although transform and quantization processing is performed for each CU, entropy coding of a quantized transform coefficient may be performed for each subblock such as 4 x 4.

Note that, in a case that the present specification mentions "a flag indicating whether XX is applied", the flag indicating a value other than 0 (for example, 1) means a case where XX is applied, and the flag indicating 0 means a case where XX is not applied, and 1 is treated as true and 0 is treated as false in a logical negation, a logical product, and the like (hereinafter, the same applies). However, other values can be used for true values and false values in real apparatuses and methods.

### Configuration of Image Decoding Apparatus

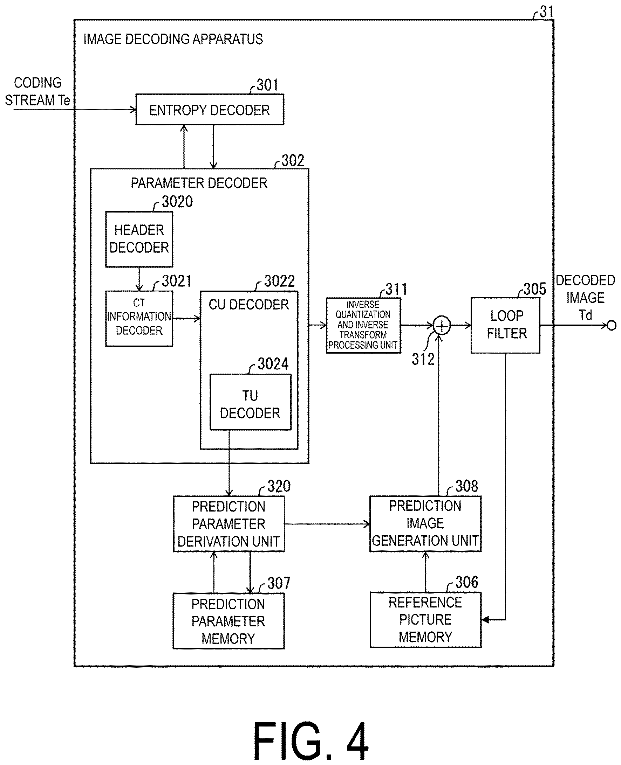

The configuration of the image decoding apparatus 31 (FIG. 4) according to the present embodiment will be described.

The image decoding apparatus 31 includes an entropy decoder 301, a parameter decoder (a prediction image decoding apparatus) 302, a loop filter 305, a reference picture memory 306, a prediction parameter memory 307, a prediction image generation unit (prediction image generation apparatus) 308, an inverse quantization and inverse transform processing unit 311, an addition unit 312, and a prediction parameter derivation unit 320. Note that the image decoding apparatus 31 may not include the loop filter 305 in accordance with the image coding apparatus 11 described later.

The parameter decoder 302 further includes a header decoder 3020, a CT information decoder 3021, and a CU decoder 3022 (prediction mode decoder), and the CU decoder 3022 further includes a TU decoder 3024. These may be collectively referred to as a decoding module. The header decoder 3020 decodes, from coded data, parameter set information such as a VPS, an SPS, a PPS, and an APS, and a slice header (slice information). The CT information decoder 3021 decodes a CT from coded data. The CU decoder 3022 decodes a CU from coded data. The TU decoder 3024 decodes QP update information (quantization correction value) and quantization prediction error (residual coding) from coded data.

The prediction image generation unit 308 includes an inter prediction image generation unit 309 and an intra prediction image generation unit 310.

The entropy decoder 301 performs entropy decoding on the coded data Te input from an external source and decodes individual codes (syntax elements).

The entropy decoder 301 outputs the decoded codes to the parameter decoder 302. Which code is to be decoded is controlled based on an indication of the parameter decoder 302.

### Basic Flow

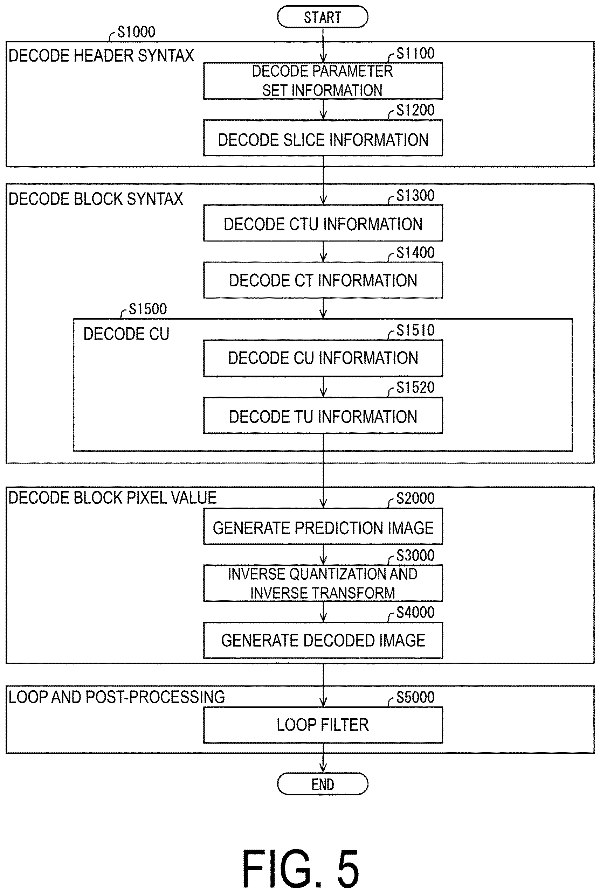

FIG. 5 is a flowchart illustrating general operation of the image decoding apparatus 31.

(S 1100: Decoding of parameter set information) The header decoder 3020 decodes parameter set information such as a VPS, an SPS, and a PPS from coded data.

(S1200: Decoding of slice information) The header decoder 3020 decodes a slice header (slice information) from the coded data.

Afterwards, the image decoding apparatus 31 repeats the processing from S1300 to S5000 for each CTU included in the target picture, and thereby derives a decoded image of each CTU.

(S1300: Decoding of CTU information) The CT information decoder 3021 decodes the CTU from the coded data.

(S1400: Decoding of CT information) The CT information decoder 3021 decodes the CT from the coded data.

(S1500: Decoding of CU) The CU decoder 3022 decodes the CU from the coded data by performing S1510 and S1520.

(S1510: Decoding of CU information) The CU decoder 3022 decodes CU information, prediction information, and the like from the coded data.

(S1520: Decoding of TU information) The TU decoder 3024 decodes QP update information, a quantization prediction error, and the like from the coded data. Note that QP update information is a difference value from a quantization parameter prediction value qPpred, which is a prediction value of a quantization parameter QP.

(S2000: Generation of prediction image) The prediction image generation unit 308 generates a prediction image, based on the prediction information, for each block included in the target CU.

(S3000: Inverse quantization and inverse transform) The inverse quantization and inverse transform processing unit 311 performs inverse quantization and inverse transform processing on each TU included in the target CU.

(S4000: Generation of decoded image) The addition unit 312 generates a decoded image of the target CU by adding the prediction image supplied by the prediction image generation unit 308 and the prediction error supplied by the inverse quantization and inverse transform processing unit 311.

(S5000: Loop filter) The loop filter 305 generates a decoded image by applying a loop filter such as a deblocking filter, an SAO, and an ALF to the decoded image.

### SEI Processing Order SEI Message

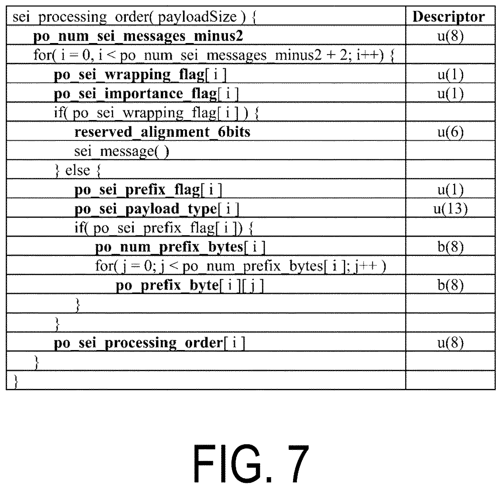

FIG. 7 illustrates a syntax of an SEI processing order SEI message. In the SEI processing order SEI message, information (priority processing order information) indicating preferable processing order determined by a coding device (that is, a producer of contents) is signaled to different types of SEI messages that may be present in the CVS.

In a case that the SEI processing order SEI message is present in any one of the access units of the CVS, the SEI processing order SEI message must be present in the first access unit of the CVS.

The SEI processing order SEI message maintains in decoding order from the current access unit until the end of the CVS.

In a case that multiple SEI processing order SEI messages are present in one CVS, they must contain the same contents. The following is required: in one SEI processing order SEI message, at least two pairs of syntax elements po_sei_payload_type[i] and po_sei_processing_order[i] are present, and at least two values of po_sei_processing_order[i] are present, which are not the same.

In the SEI processing order SEI message, information at the first part of one or more SEIs of specific payloadType can be signaled. The information at the first part of each SEI is a byte string conforming to a payload syntax of the SEI of the value of payloadType, and includes some complete syntax elements starting from the first syntax element of the payload of the SEI. Subsequently, bits not representing complete syntax elements of the SEI payload may follow.

It is required that these pieces of information at the first part of the SEI(s) can be sufficiently distinguished in a case that there are SEIs that have the same value of payloadType but are in different order.

po_num_sei_messages_minus2 plus 2 indicates the number of SEI messages having processing order indicated by the SEI processing order SEI message.

reserved_alignment_6bits is set equal to 0. The syntax element may be other than 0; however, in that case, the value is ignored.

In a case that the value of po_sei_wrapping_flag[i] is 0, the SEI message needs to be present outside of the SEI processing order SEI message having payloadType equal to po_sei_payload_type[i]. Note that, in a case that there is not an SEI message having the value of po_sei_wrapping_flag[i] being 0 and having payloadType being equal to po_sei_payload_type[i], the following is applied:
- In a case that po_sei_importance_flag[i] is equal to 1, a decoding device needs to ignore the entire SEI processing order SEI message;
- Otherwise, the decoding device needs to ignore all data associated with a loop variable value i.

Note that, in a case that the value of po_sei_wrapping_flag[i] is 1, the SEI message can be carried within the SEI processing order SEI message, and such an SEI message can be prevented from being incorrectly interpreted by the decoding device that does not process the SEI processing order SEI message. Thus, po_sei_wrapping_flag[i] equal to 1 is intended to be used in a case that po_sei_wrapping_flag[i] is 0 and its unintended results are produced by such decoding device.

In a case that the value of po_sei_prefix flag[i] is 1, it means that po_num_prefix_bytes[i] is present, whereas in a case that the value of po_sei_prefix_flag[i] is 0, it means that po_num_prefix_bytes[i] is not present.

po_sei_payload_type[i] indicates payloadType of an i-th SEI message in the SEI processing order SEI.

Regarding two different non-negative integer values of m and n, values of po_sei_payload_type[m] and po_sei_payload_type[n] must not be the same unless po_sei_prefix_flag[m] and po_sei_prefix_flag[n] are both equal to 1.

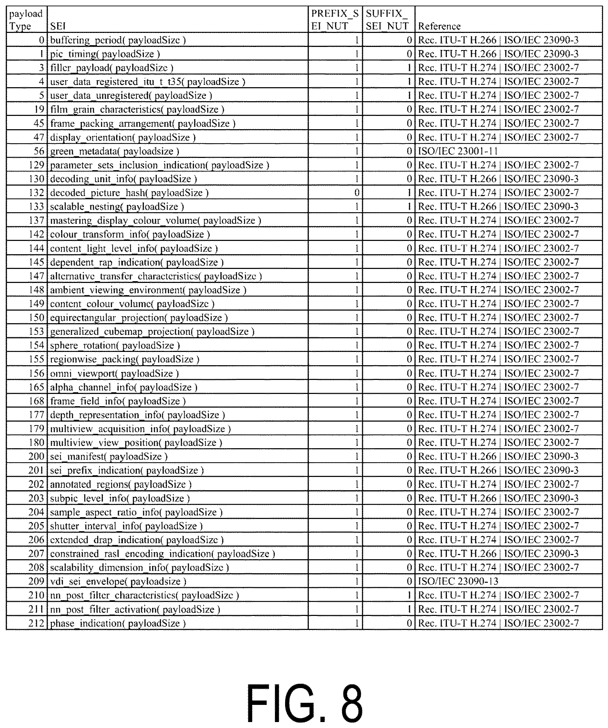

A list SeiProcessingOrderSeiList storing the priority processing order information is configured to include payloadType values indicated in FIG. 8, except values 137, 144, 147, 148, 179, 180, 200, 201, 208, and 213. In other words, the following SEI message is not applied in the SEI processing order SEI message:
- mastering_display_colour_volume;
- content_light_level_info;
- alternative_transfer_characteristic;
- ambient_viewing_environment;
- multiview_acquisition_info;
- multiview _view_position;
- sei_manifest;
- sei_prefix_indication;
- scalability_dimension_info.

In a case that po_sei_payload_type[i] is not equal to any of the values of SeiProcessingOrderSeiList, the value of po_sei_prefix flag[i] is 0.

In a case that po_num_prefix_bytes[i] is present, the priority processing order information indicates the number of bytes associated with the i-th SEI message provided in the SEI processing order SEI message. In a case that po_num_prefix_bytes[i] is not present, it is inferred that the value of po num_prefix bytes[i] is equal to 0.

In a case that po_prefix_byte[i][j] is present, a j-th byte value of the i-th SEI message is indicated.

po_sei_processing_order[i] indicates the priority processing order of the i-th SEI message. For m and n are two different integer values of 0 or greater, po_sei_processing_order[m] is smaller than po_sei_processing_order[n] indicates a SEI message type with payloadType equal to po_sei_payload_type[m].

A byte-based bitstream of po_prefix_byte[m][p] (a range of p is from 0 to po_num_prefix_bytes[m] - 1) of po_sei_processing_order[m] needs to be processed prior to any SEI message with payloadType equal to po_sei_payload_type[n],

In a case that po_sei_processing_order[m] is equal to po_sei_processing_order[n], it is indicated that there is not priority processing order between the SEI messages.

In a case that there are multiple SEI messages having the same value of po_sei_payload_type[i] and the same value of po num_prefix bytes[i], they must have the same value of po_sei_processing_order[i].

In a case that po_sei_processing_order[m] is equal to po_sei_processing_order[n], it is indicated that there is not priority processing order between the SEI messages.

In a case that there are multiple SEI messages in which po_sei_payload_type[i], the value of po num_prefix bytes[i], and the byte value of po_prefix_byte[i][j] have the same value with j being in a range of 0 to po_num_prefix_bytes[i] - 1, they have the same value of po_sei_processing_order[i].

po_sei_processing_order[0] must be 0. In a case that i is larger than 0, po_sei_processing_order[i] is equal to a value of either po_sei_processing_order[i-1] or po_sei_processing_order[i-1] + 1. A value of po_sei_processing_order[po_num_sei_messages_minus2+1] is not 0.

The image sizes (image regions) decoded from the coded data include an image size/image region obtained by decoding a parameter set of pps_pic_width_in_luma_samples and pps_pic_height_in_luma_samples, and an image size/image region obtained by cropping a region referred to as a crop region. The former is referred to as an uncropped image size/image region, and the latter is referred to as a cropped image size/image region.

In the SEI processing order SEI message disclosed in NPL 1, input and output image sizes (ranges of picture regions regarded as a target) are different depending on the SEI message, and thus there is a problem in that consistency in processing cannot be achieved.

Specifically, according to Annex D of NPL 2, it is defined that an uncropped picture having the same size as pps_pic_width_in_luma_samples and pps_pic_height_in_luma_samples is input as an input image to the SEI in the following:
- film grain characteristics SEI message;
- decoded picture hash SEI message.

In contrast, it is defined that a cropped picture having the image size to be described below (CropedWidth, CropedHeight) is input in the following SEI messages:
- annotated regions SEI message;
- neural network post-filter characteristics SEI message and neural network post-filter activation SEI message;
- phase indication SEI message.
CropedWidth = pps_pic_width_in_luma_samples - SubWidthC * (conf_win_right_offset + conf_win_left_offset) CropedHight = pps_pic_height_in_luma_samples - SubHightC * (conf_win_bottom_offset + conf_win_top_offset)

In other SEI messages as well, basically, the SEI message related picture assumes the picture with cropped image size.

In a case that the supplemental enhancement processing is performed using the SEI processing order SEI message with multiple concatenated SEI messages, when input image sizes are different for example, a larger image size needs to be invariably taken into consideration for implementation. And the supplemental enhancement processing apparatus has hitherto needed to address such a case by buffering pictures in uncropped image sizes, changing a processing range depending on the SEI message, and the like.

In the present embodiment, in order to solve a part of the above problems, a cropped picture having the image size to be described below (CropedWidth, CropedHeight is input to the SEI in the following:
- film grain characteristics SEI message;
- decoded picture hash SEI message.
CropedWidth = pps_pic_width_in_luma_samples - SubWidthC * (conf_win_right_offset + conf_win_left_offset) CropedHight = pps_pic_height_in_luma_samples - SubHightC * (conf_win_bottom_offset + conf_win_top_offset)

In a case that the following SEI is at the first place (zeroth priority processing order), the input may be an uncropped image size, otherwise the input may be a cropped image size:
- film grain characteristics SEI message;
- decoded picture hash SEI message.

In a case that there is SEI process using a cropped image size, subsequent SEI must input picture with a cropped image sizes:
- film grain characteristics SEI message;
- decoded picture hash SEI message.

By employing such a specification, differences in a supplemental enhancement processing range in a picture depending on the SEI message can be at least corrected.

In the present embodiment, in order to solve a part of the above problems, the following SEI may be included in a list of SEIs that are excluded in the SeiProcessingOrderSeiList. Therefore, this SEI may not be applied in the SEI processing order SEI message:
- decoded picture hash SEI message. In other words, SeiProcessingOrderSeiList may exclude values 137, 144, 147, 148, 179, 180, 200, 201, 208, 213, and 132. The 132 means the decoded picture hash SEI message.

Alternatively, in the present embodiment, in order to solve a part of the above problems, regarding the following, a restriction of invariably making the following come first in the processing order may be provided:
- decoded picture hash SEI message.

By employing such a specification, regarding the decoded picture hash SEI message, inconsistency in defining the processing order of the SEI can be removed.

In the present embodiment, in order to solve a part of the above problems, regarding the following, a restriction of invariably making the following come first in the processing order may be provided:
- film grain characteristics SEI message.

By employing such a specification, the SEI using an entire uncropped picture can also be processed without a problem.

In the present embodiment, in order to solve a part of the above problems, the following SEI may be included in a list that are excluded in the SeiProcessingOrderSeiList. Therefore, this SEI may not to be applied in the SEI processing order SEI message:
- film grain characteristics SEI message.

In other words, SeiProcessingOrderSeiList may exclude values 137, 144, 147, 148, 179, 180, 200, 201, 208, 213, and 19. The 19 means the film grain characteristics SEI message.

As another problem, the following may be present: for example, in the neural network post-filter characteristics SEI message and the neural network post-filter activation SEI message, an output image size, a chroma format, a pixel bit-depth, and a picture rate are changed depending on details of the processing, and thus in the specifications of the SEI message defined on the assumption of an image output from the image decoding apparatus, the supplemental enhancement processing of the SEI processing order SEI message cannot be addressed.

In the present embodiment, in order to solve the above problem, in addition to definition of the processing order, parameters of an input picture, specifically, an image size, a chroma format, a pixel bit-depth, a picture rate, and the like, are redefined as necessary.

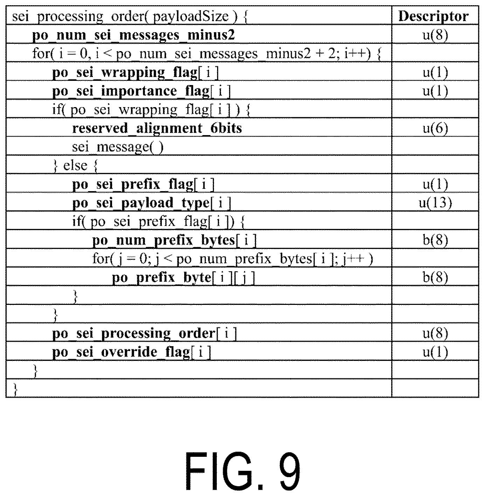

FIG. 9 illustrates a method of redefining an input of the SEI message by adding a syntax element referred to as po_sei_override_flag[i] to the syntax of FIG. 7.

In a case that the value of po_sei_override _flag[i] is 0, an input of the i-th SEI message indicates operation in accordance with an output of an image decoding device as in definition. In a case that the value ofpo_sei_override_flag[i] is 1, it is indicated that definition of an input picture of the SEI message in the po_sei_processing_order[i]-th priority order is rewritten to contents of the output of the SEI message of the last change in the priority processing order prior to the po_sei_processing_order[i]-th. Here, the contents to be rewritten are the image size, the chroma format, the pixel bit-depth, the picture rate, and the like.

Specifically, in definition of specifications of the SEI message, the image size (a cropped image size, or an uncropped image size), the chroma format, the pixel bit-depth, and the like of the decoded image output by the image decoding device have hitherto been directly carried on; however, these are rewritten to the image size, the chroma format, and the pixel bit-depth output by the SEI message of the last change in the priority processing order prior to the po_sei_processing_order[i]-th.

Here, in a case that the value ofpo_sei_override_flag[i] is 1, the value of po_sei_processing_order[i] is 0, and the input of the SEI message with the zeroth priority processing order indicated by po_sei_payload_type[i] is the uncropped image size, input is performed with a cropped image size. By employing such a configuration, the supplemental enhancement processing can be performed even in a case that parameters of an image as a processing target are changed in the middle of the bitstream.

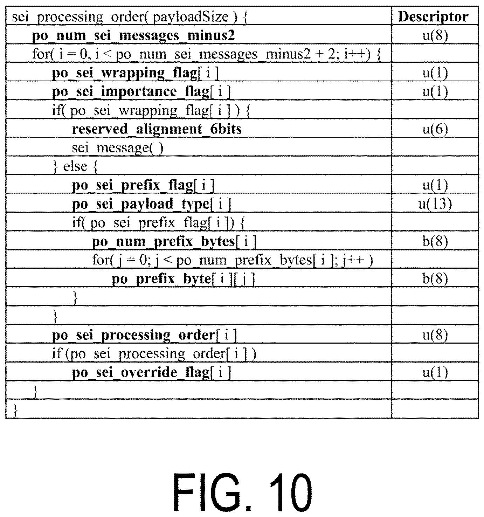

FIG. 10 is a diagram illustrating a syntax in a case that the value of po_sei_processing_order[i] is 0, that is, redefinition of an input picture of the SEI message with the zeroth priority processing order is not performed.

In a case that the value of po_sei_override _flag[i] is 0, an input of the i-th SEI message indicates operation in accordance with an output of an image decoding device as in definition. In a case that the value of po_sei_override _flag[i] is 1, it is indicated that definition of an input picture of the SEI message in the po_sei_processing_order[i]-th priority order is rewritten to contents of the output of the SEI message of the last change in the priority processing order prior to the po_sei_processing_order[i]-th. Here, the contents to be rewritten are the picture size, the chroma format, the pixel bit-depth, the picture rate, and the like. In a case that po_sei_override _flag[i] is not present, the value is inferred as 0. By employing such a configuration, the supplemental enhancement processing can be performed even in a case that parameters of an image as a processing target are changed in the middle of the bitstream.

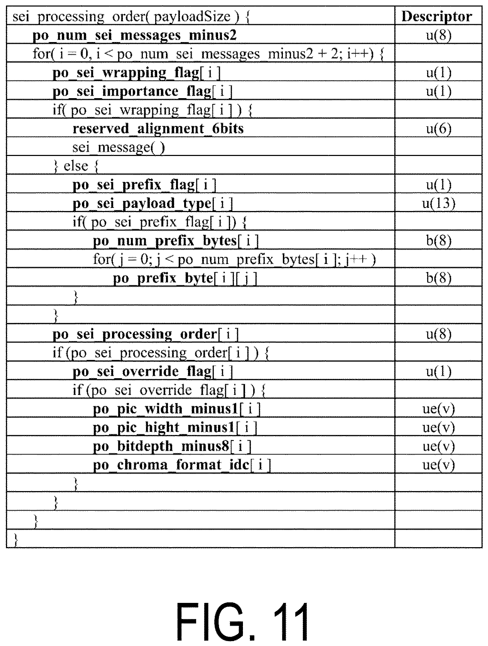

FIG. 11 illustrates a method of explicitly defining parameters as the syntax in a case that the value of po_sei_override_flag[i] is 1, in addition to the syntax of FIG. 10.

A syntax element po_pic_width_minus1[i]+ 1 indicates the number of luma pixels in the horizontal direction in the input image size of the i-th SEI message, a syntax element po_pic_height_minus1[i]+ 1 indicates the number of luma pixels in the vertical direction in the input image size of the i-th SEI message, po_bitdepth_minus8 + 8 represents a pixel bit-depth of the input image of the i-th SEI message, and po_chroma_format_idc represents a chroma format of the input image of the i-th SEI message. By employing such a configuration, the supplemental enhancement processing can be performed even in a case that parameters of an image as a processing target are changed in the middle of the bitstream.

In FIG. 9, FIG. 10, and FIG. 11, redefinition of an input picture is explicitly illustrated in the syntax; however, a method of implementation with definition of only decoding processing without adding a syntax is also considered.

In a case that the value of po_sei_processing_order[i] is 1 or greater, definition of an input picture of the SEI message with the po_sei_processing_order[i]-th priority order is rewritten to an output picture size, a chroma format, a pixel bit-depth, and a picture rate of the SEI message of the last change in the priority processing order prior to the po_sei_processing_order[i]-th. By employing such a configuration, the supplemental enhancement processing can be performed even in a case that parameters of an image as a processing target are changed in the middle of the bitstream.

As another method of the present embodiment, a restriction of invariably making the following come last in the priority processing order may be provided:
- neural network post-filter characteristics SEI message;
- neural network post-filter activation SEI message.

By employing such a restriction, parameters of an image are changed in the last supplemental enhancement processing, and thus redefinition in the middle of the bitstream is no longer required.

### SEI Payload

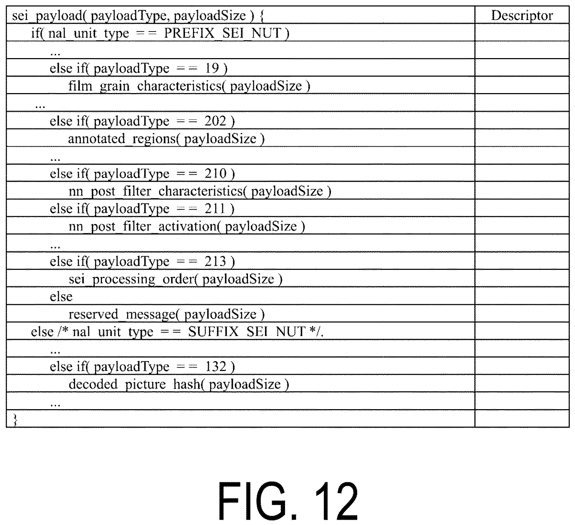

FIG. 12 is a diagram illustrating a part of the syntax of the SEI payload being a container of the SEI message.

PREFIX_SEI_NUT called in a case that nal_unit_type is PREFIX_SEI_NUT indicates that it is SEI located before the slice data.

In a case that payloadType is 19, the film grain characteristics SEI message is called.

In a case that payloadType is 202, the annotated regions SEI message is called.

In a case that payloadType is 210, the neural network post-filter characteristics SEI message is called.

In a case that payloadType is 211, the neural network post-filter activation SEI message is called.

In a case that payloadType is 213, the SEI processing order SEI is called.

SUFFIX_SEI_NUT called in a case that nal_unit_type is SUFFIX_SEI_NUT indicates that it is SEI located after the slice data.

In a case that payloadType is 132, the decoded picture hash SEI message is called.

### Configuration of Image Coding Apparatus

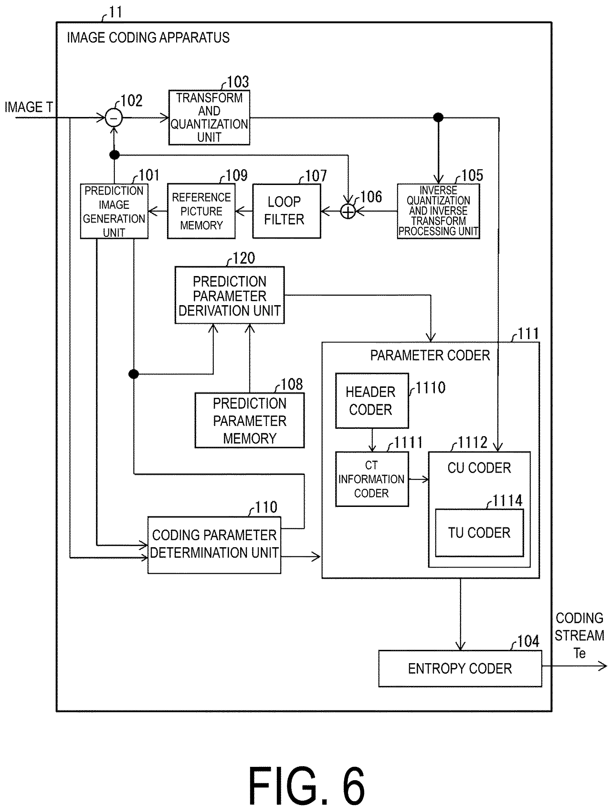

Next, a configuration of the image coding apparatus 11 according to the present embodiment will be described. FIG. 6 is a block diagram illustrating a configuration of the image coding apparatus 11 according to the present embodiment. The image coding apparatus 11 includes a prediction image generation unit 101, a subtraction unit 102, a transform and quantization unit 103, an inverse quantization and inverse transform processing unit 105, an addition unit 106, a loop filter 107, a prediction parameter memory (a prediction parameter storage unit or a frame memory) 108, a reference picture memory (a reference image storage unit or a frame memory) 109, a coding parameter determination unit 110, a parameter coder 111, a prediction parameter derivation unit 120, and an entropy coder 104.

The prediction image generation unit 101 generates a prediction image for each CU.

The subtraction unit 102 subtracts a pixel value of the prediction image of a block input from the prediction image generation unit 101 from a pixel value of an image T to generate a prediction error. The subtraction unit 102 outputs the prediction error to the transform and quantization unit 103.

The transform and quantization unit 103 performs a frequency transform on the prediction error input from the subtraction unit 102 to calculate a transform coefficient, and derives a quantized transform coefficient by quantization. The transform and quantization unit 103 outputs the quantized transform coefficient to the parameter coder 111 and the inverse quantization and inverse transform processing unit 105.

The inverse quantization and inverse transform processing unit 105 is the same as the inverse quantization and inverse transform processing unit 311 (FIG. 4) of the image decoding apparatus 31, and description thereof is omitted. The calculated prediction error is output to the addition unit 106.

The parameter coder 111 includes a header coder 1110, a CT information coder 1111, and a CU coder 1112 (prediction mode coder). The CU coder 1112 further includes a TU coder 1114. General operation of each module will be described below.

The header coder 1110 performs coding processing of parameters such as header information, split information, prediction information, and quantized transform coefficients.

The CT information coder 1111 codes the QT and MT (BT, TT) split information and the like.

The CU coder 1112 codes the CU information, the prediction information, the split information, and the like.

In a case that a prediction error is included in the TU, the TU coder 1114 codes the QP update information and the quantization prediction error.

The CT information coder 1111 and the CU coder 1112 supply, to the parameter coder 111, syntax elements such as an inter prediction parameter and the quantized transform coefficient.

The parameter coder 111 inputs the quantized transform coefficient and the coding parameters to the entropy coder 104. The entropy coder 104 performs entropy coding of the coefficients and parameters to generate and output coded data Te.

The prediction parameter derivation unit 120 derives the inter prediction parameter and an intra prediction parameter from the parameters input from the coding parameter determination unit 110. The inter prediction parameter and intra prediction parameter derived are output to the parameter coder 111.

The addition unit 106 adds, for each pixel, the pixel value for the prediction block input from the prediction image generation unit 101 and the prediction error input from the inverse quantization and inverse transform processing unit 105 to generate a decoded image. The addition unit 106 stores the generated decoded image in the reference picture memory 109.

The loop filter 107 applies a deblocking filter, an SAO, and an ALF to the decoded image generated by the addition unit 106. Note that the loop filter 107 need not necessarily include the above-described three types of filters, and may include only a deblocking filter, for example.

The prediction parameter memory 108 stores the prediction parameters generated by the coding parameter determination unit 110 at a predetermined position for each target picture and CU.

The reference picture memory 109 stores the decoded image generated by the loop filter 107 at a predetermined position for each target picture and CU.

The coding parameter determination unit 110 selects one set among multiple sets of coding parameters. The coding parameters include QT, BT, or TT split information described above, a prediction parameter, or a parameter to be coded which is generated in relation to the aforementioned elements. The prediction image generation unit 101 generates a prediction image by using these coding parameters.

Note that a computer may be used to implement some of the image coding apparatus 11 and the image decoding apparatus 31 in the above-described embodiments, for example, the entropy decoder 301, the parameter decoder 302, the loop filter 305, the prediction image generation unit 308, the inverse quantization and inverse transform processing unit 311, the addition unit 312, the prediction parameter derivation unit 320, the prediction image generation unit 101, the subtraction unit 102, the transform and quantization unit 103, the entropy coder 104, the inverse quantization and inverse transform processing unit 105, the loop filter 107, the coding parameter determination unit 110, the parameter coder 111, and the prediction parameter derivation unit 120. In that case, this configuration may be realized by recording a program for realizing such control functions on a computer-readable recording medium and causing a computer system to read and perform the program recorded on the recording medium. Note that the "computer system" mentioned here refers to a computer system built into either the image coding apparatus 11 or the image decoding apparatus 31 and is assumed to include an OS and hardware components such as a peripheral apparatus. In addition, the "computer-readable recording medium" refers to a portable medium such as a flexible disk, a magneto-optical disk, a ROM, and a CD-ROM, and a storage apparatus such as a hard disk built into the computer system. Moreover, the "computer-readable recording medium" may include a medium that dynamically stores a program for a short period of time, such as a communication line in a case that the program is transmitted over a network such as the Internet or over a communication line such as a telephone line, and may also include a medium that stores the program for a certain period of time, such as a volatile memory included in the computer system functioning as a server or a client in such a case. In addition, the above-described program may be one for implementing some of the above-described functions, and also may be one capable of implementing the above-described functions in combination with a program already recorded in a computer system.

In addition, a part or all of the image coding apparatus 11 and the image decoding apparatus 31 in the embodiments described above may be implemented as an integrated circuit such as a Large Scale Integration (LSI). Function blocks of the image coding apparatus 11 and the image decoding apparatus 31 may be individually realized as processors, or some or all of the function blocks may be integrated into processors. In addition, the circuit integration technique is not limited to LSI, and implementation as a dedicated circuit or a multi-purpose processor may be adopted. In addition, in a case that a circuit integration technology that replaces LSI appears as the semiconductor technologies advance, an integrated circuit based on that technology may be used.

Although embodiments of the present invention have been described above in detail with reference to the drawings, the specific configurations thereof are not limited to those described above and various design changes or the like can be made without departing from the spirit of the invention.

An embodiment of the present invention is not limited to the embodiments described above and various changes can be made within the scope indicated by the claims. That is, embodiments obtained by combining technical means appropriately modified within the scope indicated by the claims are also included in the technical scope of the present invention.

### Industrial Applicability

The embodiments of the present invention can be preferably applied to a video decoding apparatus for decoding coded data in which image data is coded, and a video coding apparatus for generating coded data in which image data is coded. In addition, the embodiments of the present invention can be preferably applied to a data structure of coded data generated by the video coding apparatus and referred to by the video decoding apparatus.

### Reference Signs List

1 Video transmission system
30 Video decoding apparatus
31 Image decoding apparatus
301 Entropy decoder
302 Parameter decoder
305, 107 Loop filter
306, 109 Reference picture memory
307, 108 Prediction parameter memory
308, 101 Prediction image generation unit
311, 105 Inverse quantization and inverse transform processing unit
312, 106 Addition unit
320 Prediction parameter derivation unit
10 Video coding apparatus
11 Image coding apparatus
102 Subtraction unit
103 Transform and quantization unit
104 Entropy coder
110 Coding parameter determination unit
111 Parameter coder
120 Prediction parameter derivation unit
41 Image display apparatus
51 Pre-filter processing apparatus
61 Supplemental enhancement processing apparatus
71 Supplemental enhancement information generating apparatus
81 Supplemental enhancement information coding apparatus
91 Supplemental enhancement information decoding apparatus

## Claims

1. A video decoding apparatus comprising:
an image decoding apparatus configured to decode coded data and generate a decoded image;
a supplemental enhancement processing apparatus configured to perform supplemental enhancement processing on the decoded image; and
a supplemental enhancement information decoding apparatus configured to decode multiple pieces of supplemental enhancement information for causing the supplemental enhancement processing apparatus to operate, wherein
the multiple pieces of supplemental enhancement information include a piece of supplemental enhancement information indicating priority processing order of the multiple pieces of supplemental enhancement information, and
the piece of supplemental enhancement information indicating the priority processing order of the multiple pieces of supplemental enhancement information includes information indicating change of a parameter of the decoded image to be input to the supplemental enhancement processing apparatus in accordance with the priority processing order.

2. A video coding apparatus comprising:
an image coding apparatus configured to code a video signal and generate coded data;
a supplemental enhancement information generating apparatus configured to generate multiple pieces of supplemental enhancement information; and
a supplemental enhancement information coding apparatus configured to code the multiple pieces of supplemental enhancement information, wherein
the multiple pieces of supplemental enhancement information include a piece of supplemental enhancement information indicating priority processing order of the multiple pieces of supplemental enhancement information, and
the piece of supplemental enhancement information indicating the priority processing order of the multiple pieces of supplemental enhancement information includes information indicating change of a parameter of a local decoded image to be input to a supplemental enhancement processing apparatus in accordance with the priority processing order.
